# EUROPÄISCHE PATENTSCHRIFT

(11) **EP 3 129 421 B1**
(45) Veröffentlichungstag und Bekanntmachung des Hinweises auf die Patenterteilung: **22.07.2020**
(21) Anmeldenummer: 15714470.0
(22) Anmeldetag: 01.04.2015
(51) Int. Cl.: C08G 18/54, C08G 18/08, C08G 18/66

(54) **THERMOPLASTISCHE POLYURETHANE, DEREN HERSTELLUNG UND VERWENDUNG**
THERMOPLASTIC POLYURETHANES, PRODUCTION AND USE THEREOF
POLYURÉTHANNES THERMOPLASTIQUES, LEUR PRODUCTION ET LEUR UTILISATION

(30) Priorität: 07.04.2014 DE 102014004926
(43) Veröffentlichungstag der Anmeldung: 15.02.2017
(73) Patentinhaber: Covestro Deutschland AG, 51373 Leverkusen (DE)
(72) Erfinder: WAMPRECHT, Christian, 41472 Neuss (DE); GÜRTLER, Christoph, 50735 Köln (DE)
(74) Vertreter: Levpat
(86) Internationale Anmeldenummer: PCT/EP2015/057142
(87) Internationale Veröffentlichungsnummer: WO 2015/155084

(56) Entgegenhaltungen:
- EP-A2- 0 046 538
- WO-A1-2004/096746
- US-A- 3 575 930
- US-A- 3 682 845
- US-A1- 2004 097 961

## Beschreibung

Die vorliegende Erfindung betrifft thermoplastische Polyurethane, ein Verfahren zu deren Herstellung und deren Verwendung.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z. B. im Kunststoff Handbuch [G. Becker, D. Braun], Band 7 "Polyurethane", Carl Hanser Verlag München, Wien, 1983 dokumentiert. Weitere zusammenfassende Darstellungen von TPU finden sich in Kunststoffe 68 (1978), Seiten 819 bis 825 und Kautschuk, Gummi, Kunststoffe 35 (1982), Seiten 568 bis 584.

TPU werden zumeist aus linearen Polyolen (Makrodiolen), wie z. B. Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch gleichzeitige Reaktion aller Komponenten in einer Stufe (one-shot-Dosierverfahren) erfolgen.

EP0046538A2 offenbart oligomere Formaldehyd-basierte Diole von Poly(tetramethylenether)glykol und daraus hergestellte Polyurethane.

US3682845A offenbart Polyurethane abgeleitet von Alkylenoxid-Addukten von Trimethylolphenolen und Polymeren davon.

WO2004096746A1 offenbart Ausgangsverbindungen für die Herstellung von Polyurethanen.

US3575930 offenbart Polyoxymethylenglykolpolymere.

Die Verarbeitungstechniken von TPU sind sehr vielfältig, wie z. B. Spritzguss, Extrusion, Kalander, Powder Slush. Dadurch können Formkörper, Profile, Filme, Folien, Häute usw. für verschiedenste Anwendungen erzeugt werden, wobei die jeweilige Verwendung spezifische Anforderungen an das Polymermaterial stellt. Daher werden vom Markt stets TPU mit neuen oder verbesserten Eigenschaften für diverse Anwendungen gefordert.

Aufgabe der vorliegenden Erfindung war es daher, thermoplastische Polyurethane mit verbesserten Eigenschaften zur Verfügung zu stellen.

Diese Aufgabe konnte überraschenderweise durch thermoplastische Polyurethane auf Basis von Polyoxymethylen-Blockcopolymeren, insbesondere Paraformaldehyd-basierten Polyolen gelöst werden.

Gegenstand der vorliegenden Erfindung sind thermoplastische Polyurethane, die erhältlich sind aus der Reaktion der Komponenten
a) mindestens einem organischen Diisocyanat,
b) gegenüber Isocyanaten reaktiven Verbindungen mit zahlenmittleren Molekulargewichten von jeweils 500 bis 10000 g/mol, wobei die zahlenmittlere Funktionalität der Gesamtheit der Komponenten unter b) 1,8 bis 2,5 beträgt, und
c) Kettenverlängerungsmitteln mit zahlenmittleren Molekulargewichten von jeweils 60 bis 490 g/mol, wobei die zahlenmittlere Funktionalität der Gesamtheit der Kettenverlängerungsmittel unter c) 1,8 bis 2,5 beträgt,
in Gegenwart von
d) gegebenenfalls Katalysatoren
e) gegebenenfalls monofunktionellen Kettenabbrechern,
f) gegebenenfalls Hilfs- und/oder Zusatzmitteln
wobei die Komponente b) mindestens ein Polyol auf Basis von Paraformaldehyd (b1) als Polyoxymethylen-Blockcopolymer enthält, welches durch katalytische Anlagerung von Alkylenoxiden sowie gegebenenfalls weiteren Comonomeren (wie z.B. CO₂) an wenigstens eine polymere Formaldehyd-Starterverbindung, welche zwei terminale Hydroxylgruppen aufweist, in Gegenwart eines Doppelmetallcyanid (DMC)-Katalysators erhalten wird.

Ein weiterer Gegenstand der Erfindung ist ein Verfahren zur Herstellung der erfindungsgemäßen thermoplastischen Polyurethane durch Umsetzung von
a) mindestens einem organischen Diisocyanat mit
b) gegenüber Isocyanaten reaktiven Verbindungen mit zahlenmittleren Molekulargewichten von jeweils 500 bis 10000 g/mol, wobei die zahlenmittlere Funktionalität der Gesamtheit der Komponenten unter b) 1,8 bis 2,5, vorzugsweise 1,8 bis 2,2 beträgt, und
c) Kettenverlängerungsmitteln mit gegenüber Isocyanaten reaktiven Gruppen und mit zahlenmittleren Molekulargewichten von jeweils 60 bis 490 g/mol, wobei die zahlenmittlere Funktionalität der Gesamtheit der Kettenverlängerungsmittel unter c) 1,8 bis 2,5, vorzugsweise 1,8 bis 2,2, beträgt,
in Gegenwart von
d) gegebenenfalls Katalysatoren und
e) gegebenenfalls monofunktionellen Kettenabbrechern und
f) gegebenenfalls Hilfs- und/oder Zusatzstoffen,
wobei die Komponente b) mindestens ein Polyol auf Basis von Paraformaldehyd (b1) als Polyoxymethylen-Blockcopolymer enthält, welches durch katalytische Anlagerung von Alkylenoxiden sowie gegebenenfalls weiteren Comonomeren (wie z.B. CO₂) an wenigstens eine polymere Formaldehyd-Starterverbindung, welche zwei terminale Hydroxylgruppen aufweist, in Gegenwart eines Doppelmetallcyanid (DMC)-Katalysators erhalten wird.

Zur Einstellung der Härte der erfindungsgemäßen TPU können die Aufbaukomponenten a) bis c) in relativ breiten molaren Verhältnissen variiert werden.

Das molare Verhältnis an gegenüber Isocyanaten reaktiven Gruppen der Komponenten b) und c) zu Isocyanatgruppen der Komponente a) beträgt vorzugsweise 0,8:1,0 bis 1,2:1,0, besonders bevorzugt 0,9:1,0 bis 1,1:1,0.

Die Herstellung der erfindungsgemäßen thermoplastischen Polyurethane erfolgt nach den bekannten Verfahren, üblicherweise im One-Shot- oder Prepolymerverfahren auf einer Bandanlage oder in einem Reaktionsextruder. Hierbei werden die zur Reaktion kommenden Komponenten a) bis c) in Gegenwart gegebenenfalls d), e) und f) gemeinsam oder in einer vorgegebenen Reihenfolge vereint und zur Reaktion gebracht. Beim Reaktionsextruderverfahren werden die Aufbaukomponenten a) bis c) in Gegenwart von d) und gegebenenfalls e) und f) einzeln nacheinander oder als Gemisch gemeinsam in den Extruder eingeführt, z. B. bei Temperaturen von 100° bis 250°C, vorzugsweise 150° bis 230°C, und zur Reaktion gebracht. Das dabei entstehende TPU wird aus dem Extruder ausgetragen, abgekühlt und granuliert.

Die Verarbeitung der erfindungsgemäßen TPU, die üblicherweise als Granulat oder in Pulverform zur Anwendung kommen, zu Kunststoffteilen, wie z.B. Filmen, Häuten, Beschichtungen und Folien, kann beispielsweise durch bekannte Verfahren, wie Spritzguss, Extrusion, Kalandrieren oder Sintern erfolgen.

Der Spritzguss und die Extrusion von TPU sind allgemein bekannt und vielfältig beschrieben. Als spritzgegossene oder extrudierte Kunststoffteile sind in dieser Anmeldung alle Formen von Bauteilen, Gegenständen und Formen zu verstehen, die mittels Spritzguss oder Extrusion hergestellt werden können. Die Spritzguss- oder Extrusionsverarbeitung kann auf üblichen, dem Fachmann bekannten Anlagen erfolgen. Die Verarbeitungstemperaturen zur Herstellung des Kunststoffteils liegen üblicherweise bei 140° bis 240°C, wobei durch gezielte Einstellung des Molekulargewichtes bei der Herstellung des TPU über das Verhältnis an gegenüber Isocyanatgruppen reaktiven Gruppen der Komponenten b) und c) zu Isocyanatgruppen der Komponente a) und/oder durch den Einsatz von monofunktionellen Kettenabbrechern e) ein gezieltes Verarbeitungstemperaturfenster eingestellt werden kann.

Unter dem Begriff Kunststoffteile, die aus den erfindungsgemäßen TPU hergestellt werden können, sind beispielsweise Folien, Türgriffe und Türdichtungen, Dreh- und Schaltknöpfe, Laufrollen, Türablagen, Armlehnen, Werkzeuggriffe, Pralltöpfe, Schläuche, Kabelummantelungen, Airbagabdeckungen, Instrumententafeln, Stossfängerleisten, Automobilantennen, Jalousien und Getränkehalter zu verstehen.

Die bei der Herstellung der erfindungsgemäßen TPU üblicherweise zum Einsatz kommenden Komponenten a) bis f) werden im Folgenden beispielhaft beschrieben:
Als organische Diisocyanate a) werden übliche aromatische, aliphatische und/oder cycloaliphatische Diisocyanate eingesetzt. Im Einzelnen seien beispielhaft genannt:
Aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden als aromatische organische Diisocyanate Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenylpolymethylenpolyisocyanaten.

Als weitere Diisocyanate a) können aliphatische und cycloaliphatische Diisocyanate eingesetzt werden. Beispielhaft seien genannt Hexamethylendiisocyanat, Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische und 4,4'-, 2,4'- und 2,2'-Dicyclohexylmethandiisocyanat sowie die entsprechenden Isomerengemische. Bevorzugt besteht das eingesetzte aliphatische organische Diisocyanat zu mindestens 50 Gew.-%, vorzugsweise 75 Gew.-% und besonders bevorzugt zu 100 Gew.-% aus 1,6-Hexamethylendiisocyanat.

Als gegenüber Isocyanaten reaktive Verbindungen b) können neben den erfindungsgemäß einzusetzenden Paraformaldehyd-basierten Polyolen allgemein bekannte Polyhydroxylverbindungen mit zahlenmittleren Molekulargewichten Mn von 500 bis 10000 g/mol, bevorzugt 600 bis 7500 g/mol und besonders bevorzugt 800 bis 5000 g/mol und mit einer bevorzugten zahlenmittleren Funktionalität von 1,8 bis 2,5, besonders bevorzugt 1,8 bis 2,2 und ganz besonders bevorzugt 1,9 bis 2,1 eingesetzt werden, wobei die zahlenmittlere Funktionalität der Gesamtheit der Komponenten unter b) 1,8 bis 2,5 beträgt, wie beispielsweise Polyesterpolyole, Polyetheresterpolyole, Polyetherpolyole, Polyethercarbonatpolyole, Caprolactonpolyole und Polycarbonatpolyole.

Geeignete Polyesterpolyole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: Aliphatische Dicarbonsäuren, wie Bernsteinsäure, Maleinsäure, Glutarsäure, Adipinsäure, Korksäure, Azelainsäure und Sebacinsäure und aromatische Dicarbonsäuren, wie Phthalsäure, Isophthalsäure und Terephthalsäure, bzw. die möglichen cyclischen Anhydride der genannten Dicarbonsäuren. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,2- und 1,3-Propandiol, 1,4-Butandiol, 1,5-Pentandiol, 1,6-Hexandiol, 1,10-Decandiol, 2,2-Dimethyl-1,3-propandiol, 3-Methyl-1,5-pentandiol und Dipropylenglykol. Gegebenenfalls können auch Alkohole mit mehr als 2 OH-Gruppen zur Herstellung der Polyesterpolyole in Anteilen von 0 bis 30 Mol-%, bezogen auf die eingesetzten Mole an Diolen, mit verwendet werden. Solche mehrwertigen Alkohole sind beispielsweise Trimethylolpropan oder Glycerin. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyesterdiole besitzen mittlere Molekulargewichte Mn von 500 bis 5000, bevorzugt von 700 bis 4200 g/mol und können einzeln oder in Form von Mischungen untereinander zur Anwendung kommen.

Geeignete Polyetherpolyole können dadurch hergestellt werden, dass man ein oder mehrere Alkylenoxide mit 2 bis 4 Kohlenstoffatomen im Alkylenrest mit einem Startermolekül, das bevorzugt zwei aktive Wasserstoffatome gebunden enthält, umsetzt. Als Alkylenoxide seien z.B. genannt: Ethylenoxid, 1,2-Propylenoxid, Epichlorhydrin, 1,2-Butylenoxid und 2,3-Butylenoxid. Vorzugsweise werden Ethylenoxid, 1,2-Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin, und Diole, wie Ethylenglykol, 1,2-Propylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im Wesentlichen linearen Polyetherdiole besitzen zahlenmittlere Molekulargewichte Mn von 500 bis 10 000 g/mol, bevorzugt von 700 bis 4 200 g/mol. Sie können sowohl einzeln als auch in Form von Mischungen untereinander oder in Mischung mit den anderen beschriebenen Polyolen zur Anwendung kommen.

Geeignete Polycarbonatpolyole können dadurch hergestellt werden, dass man niedermolekulare Kohlensäureester, wie z. B. Dimethylcarbonat, Diethylcarbonat oder Diphenylcarbonat mit geeigneten Polyolen, vorzugsweise Diolen, unter Katalyse entsprechender Umesterungskatalysatoren, wie z. B. Titantetraisopropylat, umestert unter Abspaltung der entsprechenden Monoalkohole, wie z. B. Methanol, Ethanol oder Phenol. Geeignete Diole zur Umesterung niedermolekularer Kohlensäureester sind beispielsweise die oben bei der Herstellung der Polyesterpolyole genannten Diole oder auch kurzkettige Polyetherdiole, wie z. B. Polytetrahydrofuran mit einem Molekulargewicht Mn von ca. 250 g/mol. Besonders gut geeignete Polycarbonatpolyole basieren auf 1,6-Hexandiol, 1,4-Butandiol, 3-Methyl-1,5-pentandiol oder Mischungen dieser Diole. Die im Wesentlichen linearen Polycarbonatpolyole besitzen zahlenmittlere Molekulargewichte Mn von 500 bis 6000 g/mol, bevorzugt 800 bis 4000 g/mol.

Geeignete Polyethercarbonatpolyole können vorzugsweise entweder durch Copolymerisation von Alkylenoxiden mit Kohlendioxid unter Katalyse spezieller Katalysatoren, wie z. B. Doppelmetallcyanidkatalysatoren, oder durch Umesterung von niedermolekularen Kohlensäureesten mit Polyetherdiolen, wie oben beschrieben, hergestellt werden. Die im Wesentlichen linearen Polycarbonatpolyole besitzen zahlenmittlere Molekulargewichte Mn von 500 bis 6000 g/mol, bevorzugt 800 bis 4000 g/mol.

Die Herstellung der erfindungswesentlichen Polyoxymethylen-Blockcopolymere und Paraformaldehyd-basierten Polyole b1) erfolgt durch katalytische Anlagerung von Alkylenoxiden sowie gegebenenfalls weiteren Comonomeren (wie z.B. CO₂) an wenigstens eine polymere Formaldehyd-Starterverbindung, welche wenigstens eine terminale Hydroxylgruppe aufweist, in Gegenwart eines Doppelmetallcyanid (DMC)-Katalysators, wobei
(i) in einem ersten Schritt der DMC-Katalysator in Gegenwart der polymeren Formaldehyd-Starterverbindung aktiviert wird, wobei zur Aktivierung des DMC-Katalysators eine Teilmenge (bezogen auf die Gesamtmenge der bei der Aktivierung und Polymerisation eingesetzten Menge an Alkylenoxiden) von einem oder mehreren Alkylenoxiden zugesetzt wird ("Aktivierung"),
(ii) in einem zweiten Schritt ein oder mehrere Alkylenoxide sowie gegebenenfalls weitere Comonomere zu der aus Schritt (i) resultierenden Mischung zugesetzt werden, wobei die in Schritt (ii) eingesetzten Alkylenoxide gleich oder verschieden sein können von den bei Schritt (i) eingesetzten Alkylenoxiden ("Polymerisation"),
und wobei die Aktivierung des DMC-Katalysators im ersten Schritt (i) bei einer Aktivierungstemperatur T_{act} von 20° bis 120°C erfolgt.

DMC-Katalysatoren sind im Prinzip aus dem Stand der Technik zur Homopolymerisation von Epoxiden bekannt (siehe z.B. US 3 404 109 A, US 3 829 505 A, US 3 941 849 A und US 5 158 922 A). DMC-Katalysatoren, die z.B. in US 5 470 813 A, EP 700 949 A, EP 743 093 A, EP 761 708 A, WO 97/40086 A, WO 98/16310 A und WO 00/47649 A beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht Mₙ größer als 500 g/mol enthalten.

Der DMC-Katalysator wird zumeist in einer Menge von kleiner 1 Gew.-%, vorzugsweise in einer Menge von kleiner 0,5 Gew.-%, besonders bevorzugt in einer Menge von kleiner 500 ppm und insbesondere in einer Menge von kleiner 300 ppm, jeweils bezogen auf das Gewicht des Polyethercarbonatpolyols eingesetzt.

Als polymere Formaldehyd-Starterverbindung eignen sich grundsätzlich solche oligomeren und polymeren Formen des Formaldehyds, welche wenigstens eine terminale Hydroxylgruppe zur Reaktion mit den Alkylenoxiden und den gegebenenfalls weiteren Comonomeren aufweisen. Unter dem Begriff "terminale Hydroxylgruppe" wird insbesondere eine terminale Halbacetal-Funktionalität verstanden, welche sich als Strukturmerkmal über die Polymerisation des Formaldehyds ergibt. Beispielweise können die Starterverbindungen lineare Oligomere und Polymere des Formaldehyds der allgemeinen Formel HO-(CH₂O)ₙ-H sein, wobei n für eine ganze Zahl ≥ 2 steht und wobei polymeres Formaldehyd typischerweise n ≥ 8 und ≤ 100 Wiederholungseinheiten aufweist.

Bekanntlich polymerisiert Formaldehyd bereits durch die Gegenwart geringer Wasserspuren. In wässriger Lösung bildet sich daher in Abhängigkeit von Konzentration und Temperatur der Lösung ein Gemisch von Oligomeren und Polymeren unterschiedlicher Kettenlängen, welche mit molekularem Formaldehyd und Formaldehyd-Hydrat im Gleichgewicht stehen. Sogenanntes Paraformaldehyd fällt hierbei als ein weißer, schlecht-löslicher Feststoff, aus der Lösung aus und stellt in der Regel ein Gemisch linearer Formaldehyd-Polymere mit n = 8 bis 100 Oxymethylen-Wiederholungseinheiten dar. Dieses letztgenannte Gemisch wird bevorzugt eingesetzt.

Die für die erfindungsgemäßen TPU geeigneten Polyoxymethylen-Blockcopolymere sind polymere Verbindungen, die mindestens einen Polyoxymethylen-Block sowie mindestens einen zusätzlichen oligomeren Block aus Alkylenoxiden oder Alkylenoxiden mit weiteren Comonomeren (z.B. Polyoxyalkylen- bzw. Polyoxyalkylencarbonat-Blöcke) enthalten, und vorzugsweise ein im vierstelligen Bereich liegendes Molekulargewicht nicht überschreiten.

Die Polyoxymethylen-Blockcopolymere bieten gegenüber existierenden Polymeren eine Reihe von Vorteilen. So können bestimmte physikalische Eigenschaften wie Glasübergangstemperaturen, Schmelzbereiche, Viskositäten und Löslichkeiten über die Länge der Polyoxymethylen-Blöcke im Verhältnis zu den anderen oligomeren Blöcken gezielt angesteuert werden. Die synthetisch variable Segmentstruktur der erhaltenen Polyoxymethylen-Blockcopolymere ermöglicht zudem die Schaffung maßgeschneiderter "hart-weich"-Segmente auf molekularer Ebene.

Gegenüber Polyoxymethylen-Homopolymeren gleichen Molekulargewichts ist die Teilkristallinität in den erfindungsgemäßen Polyoxymethylen-Blockcopolymeren typischerweise herabgesetzt; auch die Glasübergangstemperaturen, Schmelzpunkte und Viskositäten sind niedriger. Die chemische und thermische Stabilität sind ebenfalls deutlich erhöht. Zudem weisen die eingesetzten Polyoxymethylen-Blockcopolymere im Allgemeinen gute Löslichkeiten in diversen Lösungsmitteln auf, sind zumeist leicht und ohne Massenverlust aufschmelzbar oder liegen bei niedrigen Temperaturen im flüssigen Zustand vor. Gegenüber Polyoxymethylen-Homopolymeren zeigen die Polyoxymethylen-Blockcopolymeren eine deutlich bessere Verarbeitbarkeit und Prozessierbarkeit.

Gegenüber Polyetherpolyolen gleichen Molekulargewichts ist der Anteil an Polyoxyalkylen-Einheiten, die aus den entsprechenden Alkylenoxiden hergestellt werden, um den Polyoxymethylen-Anteil verringert, was zu einer vorteilhaften Wirtschaftlichkeit des Produktes beiträgt.

Als weitere gegenüber Isocyanaten reaktive Verbindungen c) (sogenannte Kettenverlängerer) können allgemein bekannte Polyhydroxylverbindungen und/oder Polyaminverbindungen mit zahlenmittleren Molekulargewichten von 60 bis 490 g/mol, bevorzugt 60 bis 400 g/mol und besonders bevorzugt 62 bis 300 g/mol und bevorzugt zahlenmittleren Funktionalitäten der Gesamtheit an Kettenverlängerern c) von 1,8 bis 2,5, bevorzugt 1,8 bis 2,2 und besonders bevorzugt 1,9 bis 2,1 eingesetzt werden. Geeignete Polyaminverbindungen sind z. B. Diamine wie (cyclo)aliphatische Diamine, beispielsweise Isophorondiamin, Ethylendiamin, 1,2-Propylendiamin, 1,3-Propylendiamin, N-Methylpropylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Weiterhin können Aminoalkohole, wie z. B. N-2-(Methylamino)ethanol oder 3-(Methylamino)-1-propanol als Kettenverlängerungsmittel c) eingesetzt werden. Bevorzugt werden als Kettenverlängerungsmittel c) eine oder mehrere Verbindungen eingesetzt aus der Gruppe der aliphatischen Diole mit 2 bis 14 Kohlenstoffatomen, wie z.B. Ethandiol, 1,2-Propandiol, 1,3-Propandiol, 1,4-Butandiol, 2,3-Butandiol, 1,5-Pentandiol, 3-Methyl-1,5-pentandiol, 1,6-Hexandiol, 1,8-Octandiol, 1,10-Decandiol, 1,12-Dodecandiol, Diethylenglykol, Dipropylenglykol, 1,4-Cyclohexandiol, 1,4-Dimethanolcyclohexan und Neopentylglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A. Die genannten Diole können auch mit unterschiedlichen molaren Mengen an ε-Caprolacton unter Ringöffnungsreaktion umgesetzt werden, so dass entsprechende Kettenverlängerer mit zahlenmittleren Molekulargewichten bis 490 g/mol entstehen. Besonders bevorzugt werden als Kettenverlängerer Ethandiol, 1,4-Butandiol, 1,6-Hexandiol, 1,4-Dimethanolcyclohexan, 1,4-Di(β-hydroxyethyl)-hydrochinon oder 1,4-Di(β-hydroxyethyl)-bisphenol A und deren Umsetzungsprodukte mit ε-Caprolacton verwendet. Daneben können auch kleinere Mengen, bis zu 10 Gew.-% bezogen auf die Gesamtmenge der Komponente c), an Triolen, wie z. B. Trimethylolpropan oder Glycerin, zugesetzt werden.

Geeignete Katalysatoren d) können gegebenenfalls im ersten und/oder zweiten Schritt des erfindungsgemäßen Verfahrens eingesetzt werden. Zur Herstellung von TPU geeignete Katalysatoren sind die gemäß dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)ethanol, Diazabicyclo[2.2.2]octan sowie organische Metallverbindungen, wie Titanverbindungen, wie z. B. Titantetraisopropylat, Titantetrabutylat, Titan-Chelat-Komplexverbindungen, Eisenverbindungen, wie z. B. Eisen-(III)-acetylacetonat, Zirkoniumverbindungen, wie z. B. Zirkon-Chelat-Komplexverbindungen, oder Zinnverbindungen, wie beispielsweise Zinndiacetat, Zinndioctanoat, Zinndilaurat oder die Zinndialkylsalze aliphatischer Carbonsäuren, wie beispielsweise Dibutylzinndiacetat oder Dibutylzinndilaurat. Bevorzugte Katalysatoren sind organische Metallverbindungen, insbesondere Titanverbindungen, Eisen-, Zirkon- und Zinnverbindungen.

Die Gesamtmenge an Katalysatoren in den TPU beträgt in der Regel etwa 0 bis 5 Gew.-%, vorzugsweise 0,0001 bis 1 Gew.-% und besonders bevorzugt 0,0002 bis 0,5 Gew.-%.

Als Kettenabbrecher e) können Verbindungen eingesetzt werden, die nur eine gegenüber den Isocyanaten a) reaktive Gruppe aufweisen, wie z. B. Monoalkohole, beispielsweise Ethanol, 1-Propanol, 2-Propanol, 1-Butanol, 1-Hexanol, 1-Octanol oder Stearylalkohol. Durch solche Kettenabbrecher können das Molekulargewicht, die Schmelzviskosität und damit auch das Fließverhalten der TPU gezielt eingestellt werden.

Als weitere Hilfs- und/oder Zusatzmittel f) können übliche Additive, wie z. B. oberflächenaktive Substanzen, Flammschutzmittel, Keimbildungsmittel, Gleit- und Entformungsmittel, Farbstoffe, Pigmente und Füllstoffe, Inhibitoren, Stabilisatoren gegen Hydrolyse, Licht, Hitze, Oxidation oder Verfärbung, Schutzmittel gegen mikrobiellen Abbau sowie Verstärkungsmittel und Weichmacher verwendet werden.

Die erfindungsgemäßen TPU sind für die an sich bekannten Kunststoff-Verarbeitungstechniken, wie z. B. Spritzguss, Extrusion, Kalander, Powder Slush usw., geeignet und liefern je nach Anforderungsprofil verbesserte Qualitäten in den so hergestellten Produkten. So wird beispielsweise bei Formkörpern eine im Vergleich zu etherbasierten TPU verbesserte Reißfestigkeit, Steifigkeit (Modul) und höhere Härte beobachtet.

Die Erfindung soll anhand der nachfolgenden Beispiele näher erläutert werden.

### Beispiele:

### Eingesetzte Rohstoffe:

Polyol 1: Acclaim® 2200N, Polyetherpolyol auf Basis von Propylenoxid mit einer OH-Zahl von 56 mg KOH/g, Handelsprodukt der Bayer MaterialScience AG.
Polyol 2: Polyoxymethylen-Blockcopolymer auf Basis von Paraformaldehyd (20 Gew.-%), Propylenoxid (66 Gew.-%) und Kohlendioxid (14 Gew.-%) mit einer OH-Zahl von 53 mg KOH/g.
BDO: 1,4-Butandiol
MDI: 4,4'-Diphenylmethandiisocyanat
Tyzor® AA105: Titankatalysator von Dorf Ketal
Irganox® 1010: Antioxidant der BASF AG
Licowax® C: Entformungsmittel von Clariant International Ltd.

### Herstellung der TPU 1 bis 3:

In einem Reaktionsgefäß wurden gemäß Tabelle 1 das jeweilige Polyol, 1% Licowax® C (bezogen auf Gesamtansatz) und 0,3% Irganox® 1010 (bezogen auf Polyol) vorgelegt und unter Rühren auf 200°C erwärmt. Dann wurden 20 ppm Tyzor® AA105 (bezogen auf Polyol) als Katalysator zugegeben. Anschließend wurde die gesamte Menge des auf 60°C erwärmten MDIs unter Rühren zugegeben, wobei sich die Temperatur im Reaktionsgefäß auf 165°C erniedrigte. Nach ca. 20 Sekunden wurde die gesamte Menge 1,4-Butandiol zugegeben. Die Reaktionsmischung erreichte ein Temperaturmaximum von ca. 215°C und wurde kräftig weiter gerührt (ca. 7 bis 8 sec). Anschließend wurde die Reaktionsmischung auf ein beschichtetes Blech gegossen und bei 80 °C 30 Minuten nachgetempert. Man erhielt nach Abkühlen eine TPU-Gießplatte.

In der Tabelle 1 werden die zur Herstellung der TPU eingesetzten reaktiven Komponenten und ihre Anteile beschrieben.

**Tabelle 1:**

| **Beispiel** | **Polyol 1 [Mol]** | **Polyol 2 [Mol]** | **MDI [Mol]** | **1,4-Butandiol [Mol]** |
|---|---|---|---|---|
| **1** | 0,512 | 0,488 | 4,039 | 2,96 |
| **2** | 0 | 1 | 4,039 | 2,96 |
| **3*** | 1 | 0 | 4,039 | 2,96 |

| | | | | |
|---|---|---|---|---|
| * nicht erfindungsgemäß | | | | |

Die erhaltenen TPU-Gießplatten wurden geschnitten und granuliert. Das Granulat wurde mit einer Spritzgießmaschine vom Typ Arburg Allrounder 470S in einem Temperaturbereich von 180° bis 230°C und in einem Druckbereich von 650 bis 750 bar bei einem Einspritzstrom von 10 bis 35 cm³/s zu Stäben (Formtemperatur: 25°C; Stabgröße: 80x10x4mm) bzw. Platten (Formtemperatur: 25°C; Größe: 125x50x2 mm) verarbeitet.

Von den hergestellten TPU wurden die Schmelze-Volumenfließrate (MVR) und die mechanischen Werte (100% Modul, 300%-Modul, Reißfestigkeit, Reißdehnung und Shore A Härte) ermittelt.

### Testbedingungen:

### 1) Schmelze-Volumenfließrate (MVR)

Die MVR Messungen wurden bei 190°C und 10 kg (98N) Auflagegewicht mit 5 min. Vorheizzeit gemäß ISO 1133 mit einem MVR Gerät der Fa. Göttfert, Modell MP-D, gemessen.

### 2) Zugversuch

Der Zugversuch erfolgte an S1-Stäben (entspricht Prüfkörper Typ 5 nach EN ISO 527, ausgestanzt aus Spritzplatten) gemäß DIN 53455 mit einer Zuggeschwindigkeit von 200 mm/min.

### 3) Härte

Die Messung der Härte erfolgte nach DIN 53505.

Die gemessenen Werte sind in der nachfolgenden Tabelle 2 aufgeführt.

**Tabelle 2:**

| TPU aus | MVR [ml/10 min.] | 100% Modul [MPa] | 300% Modul [MPa] | Reißfestigkeit [MPa] | Reißdehnung [%] | Shore A Härte |
|---|---|---|---|---|---|---|
| Beispiel 1 | 8,1 | 6,7 | 9,6 | 17,0 | 680 | 86 |
| Beispiel 2 | 22,8 | 8,1 | 10,2 | 21,9 | 519 | 89 |
| Beispiel 3* | 3,0 | 5,0 | 8,4 | 16,8 | 729 | 83 |

| | | | | | | |
|---|---|---|---|---|---|---|
| *- nicht erfindungsgemäß | | | | | | |

Es zeigen sich deutliche Unterschiede in den mechanischen Eigenschaften der drei hergestellten TPU. Der 100% Modul, der 300% Modul und die Reißfestigkeit der erfindungsgemäßen TPU 1 und 2 sind jeweils höher als beim nicht erfindungsgemäßen TPU 3. Obwohl die Menge an Kettenverlängerungsmittel bei allen drei TPU gleich ist, liegt auch die Shore A Härte der beiden erfindungsgemäßen TPU höher als beim Vergleichs-TPU. Die Reißdehnungswerte der drei TPU liegen auf einem sehr hohen Niveau und sind für alle Anwendungen ausreichend.

## Patentansprüche

1. Thermoplastische Polyurethane erhältlich aus der Reaktion der Komponenten
a) mindestens einem organischen Diisocyanat,
b) gegenüber Isocyanaten reaktiven Verbindungen mit jeweils zahlenmittleren Molekulargewichten von 500 bis 10000 g/mol, wobei die zahlenmittlere Funktionalität der Gesamtheit der Komponenten unter b) 1,8 bis 2,5 beträgt, und
c) Kettenverlängerungsmitteln mit jeweils zahlenmittleren Molekulargewichten von 60 bis 490 g/mol, wobei die zahlenmittlere Funktionalität der Gesamtheit der Kettenverlängerungsmittel unter c) 1,8 bis 2,5 beträgt,
in Gegenwart von
d) gegebenenfalls Katalysatoren,
e) gegebenenfalls monofunktionellen Kettenabbrechern,
f) gegebenenfalls Hilfs- und/oder Zusatzmitteln,
wobei die Komponente b) mindestens ein Polyol auf Basis von Paraformaldehyd (b1) als Polyoxymethylen-Blockcopolymer enthält, welches durch katalytische Anlagerung von Alkylenoxiden sowie gegebenenfalls weiteren Comonomeren an wenigstens eine polymere Formaldehyd-Starterverbindung, welche zwei terminale Hydroxylgruppen aufweist, in Gegenwart eines Doppelmetallcyanid (DMC)-Katalysators erhalten wird.

2. Verfahren zur Herstellung der thermoplastischen Polyurethane gemäß Anspruch 1 durch Umsetzung von
a) mindestens einem organischen Diisocyanat mit
b) gegenüber Isocyanaten reaktiven Verbindungen mit jeweils zahlenmittleren Molekulargewichten von 500 bis 10000 g/mol, wobei die zahlenmittlere Funktionalität der Gesamtheit der Komponenten unter b) 1,8 bis 2,5 beträgt, und
c) Kettenverlängerungsmitteln mit gegenüber Isocyanaten reaktiven Gruppen und mit jeweils zahlenmittleren Molekulargewichten von 60 bis 490 g/mol, wobei die zahlenmittlere Funktionalität der Gesamtheit der Kettenverlängerungsmittel unter c) 1,8 bis 2,5 beträgt
in Gegenwart von
d) gegebenenfalls Katalysatoren,
e) gegebenenfalls monofunktionellen Kettenabbrechern und
f) gegebenenfalls Hilfs- und/oder Zusatzstoffen,
wobei die Komponente b) mindestens ein Polyol auf Basis von Paraformaldehyd (b1) als Polyoxymethylen-Blockcopolymer enthält, welches durch katalytische Anlagerung von Alkylenoxiden sowie gegebenenfalls weiteren Comonomeren an wenigstens eine polymere Formaldehyd-Starterverbindung, welche zwei terminale Hydroxylgruppen aufweist, in Gegenwart eines Doppelmetallcyanid (DMC)-Katalysators erhalten wird.

3. Verwendung der thermoplastischen Polyurethane gemäß Anspruch 1 zur Herstellung von Kunststoffteilen.

## Claims

1. Thermoplastic polyurethanes obtainable from the reaction of the components:
a) at least one organic diisocyanate,
b) compounds reactive towards isocyanates and in each case having number-average molar masses of 500 to 10 000 g/mol, where the number-average functionality of the entirety of the components of b) is 1.8 to 2.5, and
c) chain extenders in each case having number-average molar masses of 60 to 490 g/mol, where the number-average functionality of the entirety of the chain extenders of c) is 1.8 to 2.5,
in the presence of
d) optionally catalysts,
e) optionally monofunctional chain terminators,
f) auxiliaries and/or additional substances,
where component b) comprises at least one polyol based paraformaldehyde (b1) as polyoxymethylene block copolymer which is obtained via a catalytic addition reaction between alkylene oxides and optionally other comonomers and at least one polymeric formaldehyde starter compound which has two terminal hydroxy groups in the presence of a double metal cyanide (DMC) catalyst.

2. Process for the production of the thermoplastic polyurethanes according to Claim 1 via reaction of
a) at least one organic diisocyanate,
b) compounds reactive towards isocyanates and in each case having number-average molar masses of 500 to 10 000 g/mol, where the number-average functionality of the entirety of the components of b) is 1.8 to 2.5, and
c) chain extenders having groups reactive towards isocyanates and in each case having number-average molar masses of 60 to 490 g/mol, where the number-average functionality of the entirety of the chain extenders of c) is 1.8 to 2.5,
in the presence of
d) optionally catalysts,
e) optionally monofunctional chain terminators, and
f) auxiliaries and/or additional substances,
where component b) comprises at least one polyol based paraformaldehyde (b1) as polyoxymethylene block copolymer which is obtained via a catalytic addition reaction between alkylene oxides and optionally other comonomers and at least one polymeric formaldehyde starter compound which has two terminal hydroxy groups in the presence of a double metal cyanide (DMC) catalyst.

3. Use of the thermoplastic polyurethanes according to Claim 1 for the production of plastics parts.

## Revendications

1. Polyuréthanes thermoplastiques pouvant être obtenus par la réaction des composants
a) au moins un diisocyanate organique,
b) des composés réactifs envers des isocyanates dotés à chaque fois de poids moléculaires moyens en nombre de 500 à 10 000 g/mole, la fonctionnalité moyenne en nombre de la totalité des composants sous b) étant de 1,8 à 2,5, et
c) des agents d'extension de chaînes dotés à chaque fois de poids moléculaires moyens en nombre de 60 à 490 g/mole, la fonctionnalité moyenne en nombre de la totalité des agents d'extension de chaînes sous c) étant de 1,8 à 2,5,
en présence de
d) éventuellement des catalyseurs,
e) éventuellement des agents de terminaison de chaînes monofonctionnels,
f) éventuellement des auxiliaires et/ou des additifs,
le composant b) contenant au moins un polyol à base de paraformaldéhyde (b1) en tant que copolymère à blocs de polyoxyméthylène, qui est obtenu par addition catalytique d'oxydes d'alkylène ainsi qu'éventuellement de comonomères supplémentaires à au moins un composé de départ polymérique de formaldéhyde, qui présente deux groupes terminaux hydroxyle, en présence d'un catalyseur de type cyanure métallique double (CMD) .

2. Procédé pour la préparation des polyuréthanes thermoplastiques selon la revendication 1 par transformation de
a) au moins un diisocyanate organique,
b) des composés réactifs envers des isocyanates dotés à chaque fois de poids moléculaires moyens en nombre de 500 à 10 000 g/mole, la fonctionnalité moyenne en nombre de la totalité des composants sous b) étant de 1,8 à 2,5, et
c) des agents d'extension de chaînes dotés de groupes réactifs envers des isocyanates et dotés à chaque fois de poids moléculaires moyens en nombre de 60 à 490 g/mole, la fonctionnalité moyenne en nombre de la totalité des agents d'extension de chaînes sous c) étant de 1,8 à 2,5,
en présence de
d) éventuellement des catalyseurs,
e) éventuellement des agents de terminaison de chaînes monofonctionnels,
f) éventuellement des auxiliaires et/ou des additifs,
le composant b) contenant au moins un polyol à base de paraformaldéhyde (b1) en tant que copolymère à blocs de polyoxyméthylène, qui est obtenu par addition catalytique d'oxydes d'alkylène ainsi qu'éventuellement de comonomères supplémentaires à au moins un composé de départ polymérique de formaldéhyde, qui présente deux groupes terminaux hydroxyle, en présence d'un catalyseur de type cyanure métallique double (CMD) .

3. Utilisation des polyuréthanes thermoplastiques selon la revendication 1 pour la préparation de pièces de plastique.
